# EUROPEAN PATENT APPLICATION

(11) **EP 4 611 054 A1**
(43) Date of publication of application: **03.09.2025**
(21) Application number: 23882367.8
(22) Date of filing: 04.10.2023
(51) Int. Cl.: H01M 4/133, H01M 4/134, H01M 4/36, H01M 4/62

(54) **NEGATIVE ELECTRODE FOR NON-AQUEOUS-ELECTROLYTE SECONDARY BATTERY, AND NON-AQUEOUS-ELECTROLYTE SECONDARY BATTERY**

(30) Priority: 24.10.2022 JP 2022169933
(71) Applicant: Panasonic Intellectual Property Management Co., Ltd., Kadoma-shi, Osaka 571-0057 (JP)
(72) Inventor: OKUNO, Yukiho, Kadoma-shi, Osaka 571-0057 (JP); SATO, Yosuke, Kadoma-shi, Osaka 571-0057 (JP); SATO, Shin, Kadoma-shi, Osaka 571-0057 (JP)
(74) Representative: Eisenführ Speiser
(86) International application number: PCT/JP2023/036215
(87) International publication number: WO 2024/090158

(57) **Abstract**

A negative electrode (12) according to an embodiment of the present invention comprises: a negative electrode core (40); and a negative electrode mixture layer (41) that is positioned on the negative electrode core (40), the negative electrode mixture layer (41) containing a negative electrode active material (50) and a water-soluble polymer (51). The water-soluble polymer (51) is present such that an amount of 0.50 mass% or more relative to the negative electrode active material (50) is adsorbed onto the negative electrode active material (50), and an amount of 1.05 mass% or less is separated from the negative electrode active material (50). The negative electrode active material (50) includes a carbon material and a silicon-containing material.

## Description

### TECHNICAL FIELD

The present disclosure relates to a negative electrode for a non-aqueous electrolyte secondary battery and a non-aqueous electrolyte secondary battery using this negative electrode.

### BACKGROUND ART

A negative electrode that constitutes a non-aqueous electrolyte secondary battery such as a lithium-ion battery is typically manufactured by applying a negative electrode mixture slurry including a negative electrode active material, a binder, and the like onto a core such as metal foil, and drying and compressing the coating film to form a negative electrode mixture layer on the core.

Patent Literature 1 discloses a negative electrode mixture slurry for a lithium-ion secondary battery in which a negative electrode active material, carboxymethylcellulose, and an SBR emulsion including styrene-butadiene rubber particles are dispersed in water. Patent Literature 1 describes that carboxymethylcellulose at an amount corresponding to greater than or equal to 0.10 wt% and less than or equal to 0.40 wt% of the negative electrode active material is adsorbed on the negative electrode active material.

Patent Literature 2 discloses a negative electrode for a lithium-ion secondary battery, including two types of negative electrode active materials. Patent Literature 2 describes that a resin (A) is formed on particle surfaces of a negative electrode active material (A), a resin (B) is formed on particle surfaces of a negative electrode active material (B), which is of particles smaller than the negative electrode active material (A), and a coating amount of the resin (B) on the negative electrode active material (B) is larger than a coating amount of the resin (A) on the negative electrode active material (A).

### CITATION LIST

### PATENT LITERATURE

PATENT LITERATURE 1: Japanese Unexamined Patent Application Publication No. 2013-257978
PATENT LITERATURE 2: Japanese Unexamined Patent Application Publication No. 2013-187033

### SUMMARY

It is an important challenge for the non-aqueous electrolyte secondary battery to improve cycle characteristics while keeping high capacity. As a result of investigation by the present inventors, it has been found that a dispersion state of the negative electrode active material, specifically a dispersion state of a silicon-containing material, in the negative electrode mixture layer significantly affects the cycle characteristics. The conventional art including Patent Literatures 1 and 2 does not consider the dispersion state of the silicon-containing material in the negative electrode mixture layer, and still has large room for improvement on improvement of the cycle characteristics.

A negative electrode for a non-aqueous electrolyte secondary battery according to the present disclosure is a negative electrode for a non-aqueous electrolyte secondary battery, comprising: a negative electrode core; and a negative electrode mixture layer including a negative electrode active material and a water-soluble polymer, and disposed on the negative electrode core, wherein the water-soluble polymer is present in each of: a state where the water-soluble polymer at an amount of greater than or equal to 0.50 mass% relative to the negative electrode active material is adsorbed on the negative electrode active material; and a state where the water-soluble polymer at an amount of less than or equal to 1.05 mass% relative to the negative electrode active material is released from the negative electrode active material, and the negative electrode active material includes a carbon material and a silicon-containing material.

A non-aqueous electrolyte secondary battery according to the present disclosure comprises: the above negative electrode; a positive electrode; and a non-aqueous electrolyte.

The non-aqueous electrolyte secondary battery according to the present disclosure has high capacity and excellent cycle characteristics.

### BRIEF DESCRIPTION OF DRAWING

FIG. 1 is a sectional view of a non-aqueous electrolyte secondary battery of an example of an embodiment.
FIG. 2 is a view illustrating a state of a negative electrode active material and a water-soluble polymer in a negative electrode mixture layer.
FIG. 3 is a view for describing a method for measuring an adsorption amount and a release amount of a water-soluble polymer relative to a negative electrode active material.

### DESCRIPTION OF EMBODIMENTS

Use of a silicon-containing material as a negative electrode active material can increase capacity of a battery. However, as noted above, the present inventors have made investigation and consequently found that a dispersion state of the negative electrode active material, specifically a silicon-containing material, in the negative electrode mixture layer significantly affects the cycle characteristics of the battery. It has been found that the dispersibility of the negative electrode active material (specifically the silicon-containing material) becomes good to specifically improve the cycle characteristics when a predetermined amount of a water-soluble polymer is adsorbed on particle surfaces of the negative electrode active material and a predetermined amount of a released water-soluble polymer, which is not adsorbed on the negative electrode active material, is present.

The adsorbed component and the released component of the water-soluble polymer relative to the negative electrode active material are considered to be present at the equivalent amount also in a negative electrode mixture slurry used for manufacturing the negative electrode. The presence of the adsorbed component of the water-soluble polymer at greater than or equal to the predetermined amount improves compatibility with a dispersion medium (water), and hardly causes aggregation of the negative electrode active material. That is, the good dispersion state of the negative electrode active material is achieved in the negative electrode mixture layer. It is considered that uniformization of battery reactions is consequently enhanced to effectively inhibit decrease in the capacity due to deterioration of the active material and the like with charge and discharge. The predetermined amount of the released component is considered to contribute to stabilization of the slurry.

Hereinafter, an example of embodiments of the negative electrode for a non-aqueous electrolyte secondary battery according to the present disclosure and the non-aqueous electrolyte secondary battery using this negative electrode will be described in detail with reference to the drawings. The scope of the present disclosure includes constitutions composed of selective combinations of constitutional elements of a plurality of embodiments and modified examples described below.

In embodiments described below, a non-aqueous electrolyte secondary battery 10, which is a cylindrical battery in which a wound electrode assembly 14 is housed in a bottomed cylindrical exterior housing can 16, will be exemplified, but the exterior body of the battery is not limited to the cylindrical exterior housing can. Examples of other embodiments of the non-aqueous electrolyte secondary battery according to the present disclosure include a rectangular battery comprising a rectangular exterior housing can, a coin battery comprising a coin-shaped exterior housing can, and a pouch battery comprising an exterior body constituted with laminated sheets including a metal layer and a resin layer. The electrode assembly is not limited to a wound electrode assembly, and may be a stacked electrode assembly in which a plurality of positive electrodes and a plurality of negative electrodes are alternately stacked via a separator.

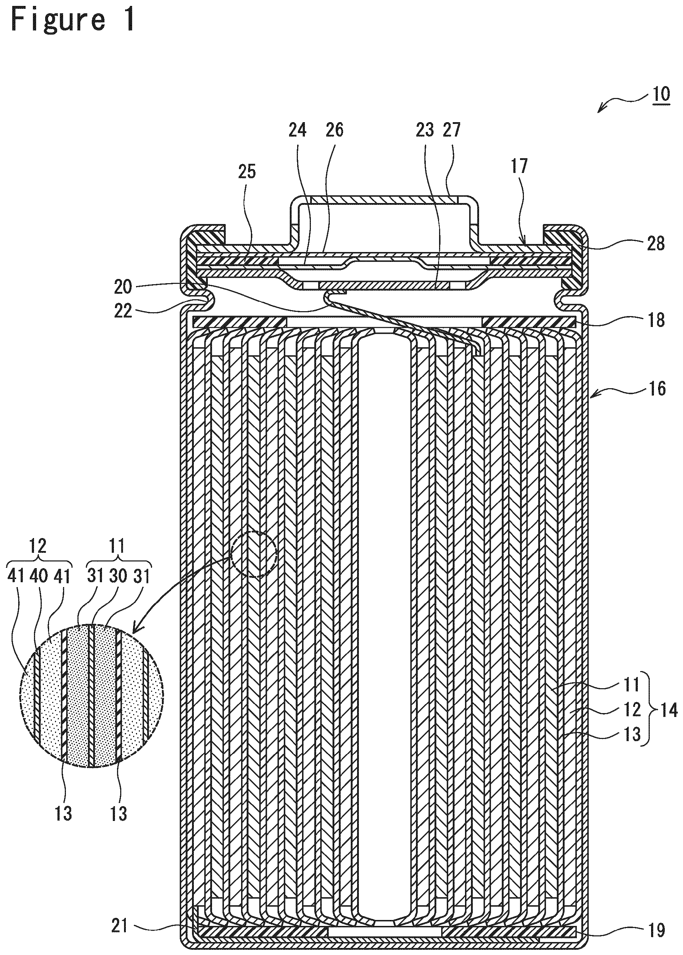

FIG. 1 is a view schematically illustrating an axial cross section of the non-aqueous electrolyte secondary battery 10 of an example of an embodiment. As illustrated in FIG. 1, the non-aqueous electrolyte secondary battery 10 comprises the wound electrode assembly 14, an non-aqueous electrolyte, and the exterior housing can 16 housing the electrode assembly 14 and the non-aqueous electrolyte. The electrode assembly 14 has a positive electrode 11, a negative electrode 12, and a separator 13, and has a wound structure in which the positive electrode 11 and the negative electrode 12 are spirally wound via the separator 13. The exterior housing can 16 is a bottomed cylindrical metallic container having an opening portion on one end side in an axial direction, and the opening of the exterior housing can 16 is sealed with a sealing assembly 17. Hereinafter, for convenience of description, the sealing assembly 17 side of the battery will be described as the upper side, and the bottom side of the exterior housing can 16 will be described as the lower side.

The non-aqueous electrolyte has ion conductivity (for example, lithium-ion conductivity). The non-aqueous electrolyte may be a liquid electrolyte (an electrolyte liquid) or may be a solid electrolyte.

The liquid electrolyte (the electrolyte liquid) includes a non-aqueous solvent and an electrolyte salt dissolved in the non-aqueous solvent. For the non-aqueous solvent, esters, ethers, nitriles, amides, and a mixed solvent of two or more thereof, and the like are used, for example. An example of the non-aqueous solvent is ethylene carbonate (EC), ethyl methyl carbonate (EMC), dimethyl carbonate (DMC), diethyl carbonate (DEC), a mixed solvent thereof, or the like. The non-aqueous solvent may contain a halogen-substituted derivative in which hydrogen of these solvents is at least partially replaced with a halogen atom such as fluorine (for example, fluoroethylene carbonate or the like). For the electrolyte salt, a lithium salt such as LiPF₆ is used, for example.

As the solid electrolyte, a solid or gel polymer electrolyte, an inorganic solid electrolyte, or the like is used, for example. The polymer electrolyte includes a lithium salt and a matrix polymer, or includes a non-aqueous solvent, a lithium salt, and a matrix polymer, for example. As the matrix polymer, a polymer material that absorbs the non-aqueous solvent to form a gel is used, for example. As the polymer material, a fluororesin, an acrylic resin, a polyether resin, or the like is used, for example. As the inorganic solid electrolyte, a known material for an all-solid lithium-ion secondary battery and the like (for example, an oxide-type solid electrolyte, a sulfide-type solid electrolyte, a halide-type solid electrolyte, or the like) is used, for example.

The positive electrode 11, the negative electrode 12, and the separator 13, which constitute the electrode assembly 14, are all a band-shaped elongated body, and spirally wound to be alternately stacked in a radial direction of the electrode assembly 14. To prevent precipitation of lithium, the negative electrode 12 is formed to be one size larger than the positive electrode 11. That is, the negative electrode 12 is formed to be longer than the positive electrode 11 in a longitudinal direction and a width direction. The separators 13 are formed to be one size larger than at least the positive electrode 11, and two of them are disposed so as to sandwich the positive electrode 11, for example. The electrode assembly 14 has a positive electrode lead 20 connected to the positive electrode 11 by welding or the like and a negative electrode lead 21 connected to the negative electrode 12 by welding or the like.

Insulating plates 18 and 19 are respectively disposed on the upper and lower sides of the electrode assembly 14. In the example illustrated in FIG. 1, the positive electrode lead 20 extends through a through hole of the insulating plate 18 toward the sealing assembly 17 side, and the negative electrode lead 21 extends through the outside of the insulating plate 19 toward the bottom side of the exterior housing can 16. The positive electrode lead 20 is connected to a lower surface of an internal terminal plate 23 of the sealing assembly 17 by welding or the like, and a cap 27, which is a top plate of the sealing assembly 17 electrically connected to the internal terminal plate 23, becomes a positive electrode terminal. The negative electrode lead 21 is connected to a bottom inner surface of the exterior housing can 16 by welding or the like, and the exterior housing can 16 becomes a negative electrode terminal.

A gasket 28 is provided between the exterior housing can 16 and the sealing assembly 17 to achieve sealability inside the battery. On the exterior housing can 16, a grooved portion 22 in which a part of a side surface portion thereof projects inward to support the sealing assembly 17 is formed. The grooved portion 22 is preferably formed in a circular shape along a circumferential direction of the exterior housing can 16, and supports the sealing assembly 17 with the upper face thereof. The sealing assembly 17 is fixed on the upper part of the exterior housing can 16 with the grooved portion 22 and with an end part of the opening of the exterior housing can 16 caulked to the sealing assembly 17.

The sealing assembly 17 has a stacked structure of the internal terminal plate 23, a lower vent member 24, an insulating member 25, an upper vent member 26, and the cap 27 in this order from the electrode assembly 14 side. Each member constituting the sealing assembly 17 has, for example, a disk shape or a ring shape, and each member except for the insulating member 25 is electrically connected to each other. The lower vent member 24 and the upper vent member 26 are connected at each of central parts thereof, and the insulating member 25 is interposed between the circumferential parts of the lower vent member 24 and the upper vent member 26. If the internal pressure of the battery increases due to abnormal heat generation, the lower vent member 24 is deformed so as to push the upper vent member 26 up toward the cap 27 side and breaks, and thereby a current pathway between the lower vent member 24 and the upper vent member 26 is cut off. If the internal pressure further increases, the upper vent member 26 breaks, and gas is discharged through an opening portion of the cap 27.

Hereinafter, the positive electrode 11, the negative electrode 12, and the separator 13 that constitute the electrode assembly 14, specifically the negative electrode 12, will be described in detail.

### [Positive Electrode]

The positive electrode 11 has a positive electrode core 30 and a positive electrode mixture layer 31 disposed on the positive electrode core 30. For the positive electrode core 30, a foil of a metal stable within a potential range of the positive electrode 11, such as aluminum, an aluminum alloy, stainless steel, and titanium, a film in which such a metal is disposed on a surface thereof, and the like may be used. The positive electrode mixture layer 31 includes a positive electrode active material, a conductive agent, and a binder, and is preferably provided on both surfaces of the positive electrode core 30 except for a portion where the positive electrode lead 20 is to be connected. The positive electrode 11 may be produced by, for example, applying a positive electrode mixture slurry including the positive electrode active material, the conductive agent, and the binder on the surfaces of the positive electrode core 30, and drying and subsequently compressing the coating film to form the positive electrode mixture layer 31 on both the surfaces of the positive electrode core 30.

For the positive electrode active material, a lithium-transition metal composite oxide containing a transition metal element such as Ni, Co, and Mn is used. Examples of the metal element contained in the lithium-transition metal composite oxide include Ni, Co, Mn, Al, Be, B, Na, Mg, Si, K, Ca, Sc, Ti, V, Cr, Fe, Cu, Zn, Ga, Sr, Y, Zr, Nb, Mo, In, Sn, Sb, Ba, Ta, W, Pb, and Bi. Among these, at least one of Ni, Co, and Mn is preferably contained. The composite oxide may further contain Al.

Examples of the conductive agent included in the positive electrode mixture layer 31 may include carbon black such as acetylene black and Ketjenblack, graphite, carbon nanotube (CNT), carbon nanofiber, graphene, metal fiber, metal powder, and conductive whisker. The conductive agent may be used singly, or a plurality of types thereof may be used in combination.

Examples of the binder included in the positive electrode mixture layer 31 may include fluorine-containing resins such as polytetrafluoroethylene (PTFE) and polyvinylidene fluoride (PVDF), olefin resins such as polyethylene, polypropylene, ethylene-propylene-isoprene copolymer, and ethylene-propylene-butadiene copolymer, polyacrylonitrile (PAN), a polyimide, a polyamide, and acrylic resins such as ethylene-acrylic acid copolymer. These resins may be used in combination with carboxymethylcellulose (CMC) or a salt thereof, polyethylene oxide (PEO), and the like. The binder may be used singly, or a plurality of types thereof may be used in combination. Content rates of the conductive agent and the binder are, for example, each greater than or equal to 0.1 mass% and less than or equal to 5 mass% relative to a mass of the positive electrode mixture layer 31.

### [Negative Electrode]

The negative electrode 12 has a negative electrode core 40 and a negative electrode mixture layer 41 disposed on the negative electrode core 40. For the negative electrode core 40, a foil of a metal stable within a potential range of the negative electrode 12, such as copper, a copper alloy, stainless steel, nickel, and a nickel alloy, a film in which such a metal is disposed on a surface thereof, and the like may be used. The negative electrode mixture layer 41 includes a negative electrode active material and a binder, and is preferably provided on both surfaces of the negative electrode core 40 except for a portion where the negative electrode lead 21 is to be connected. The negative electrode 12 may be produced by, for example, applying a negative electrode mixture slurry including the negative electrode active material and the binder on the surface of the negative electrode core 40, and drying and subsequently compressing the coating film to form the negative electrode mixture layer 41 on both the surfaces of the negative electrode core 40. The negative electrode mixture layer 41 may include a conductive agent such as CNT.

The negative electrode 12 includes a carbon material and a silicon-containing material as the negative electrode active material. Use of the carbon material and the silicon-containing material in combination easily achieves both high capacity and excellent cycle characteristics. The negative electrode 12 may include, for example, a silicon-containing material other than the silicon-containing material, a material containing another element that constitutes an alloy with Li, or the like as the negative electrode active material, but the negative electrode 12 in the present embodiment includes substantially only the carbon material and the silicon-containing material. The negative electrode mixture layer 41 includes a water-soluble polymer together with the negative electrode active material. The water-soluble polymer provides a good dispersion state of the negative electrode active material, specifically a dispersion state of the silicon-containing material, in the negative electrode mixture layer 41.

A content rate of the carbon material is preferably higher than a content rate of the silicon-containing material. The content rate of the silicon-containing material is preferably less than or equal to 40 mass%, more preferably less than or equal to 35 mass%, and particularly preferably less than or equal to 30 mass% based on a total mass of the negative electrode active material from the viewpoint of improvement of the cycle characteristics. The content rate of the silicon-containing material is preferably greater than or equal to 5 mass% based on the total mass of the negative electrode active material from the viewpoints of increase in the capacity and improvement of the cycle characteristics. An example of a preferable range of the content rate of the silicon-containing material is greater than or equal to 5 mass% and less than or equal to 35 mass%, and more preferably greater than or equal to 5 mass% and less than or equal to 30 mass% or greater than or equal to 5 mass% and less than or equal to 25 mass% based on the total mass of the negative electrode active material.

The carbon material that functions as the negative electrode active material is, for example, at least one selected from the group consisting of natural graphite, artificial graphite, soft carbon, and hard carbon. Among these, at least artificial graphite such as massive artificial graphite (MAG) or graphitized mesophase-carbon microbead (MCMB); natural graphite such as flake graphite, massive graphite, or amorphous graphite; or a mixture thereof is preferably used as the carbon material. A volume-based D50 of the carbon material is, for example, greater than or equal to 1 µm and less than or equal to 30 µm, and preferably greater than or equal to 5 µm and less than or equal to 25 µm, or greater than or equal to 10 µm and less than or equal to 20 µm.

The soft carbon and the hard carbon are classified as amorphous carbon in which a graphite crystal structure is not developed. More specifically, the amorphous carbon means a carbon content with a d(002) spacing by X-ray diffraction of greater than or equal to 0.342 nm. The soft carbon is also called as easily graphitized carbon, which is carbon easily graphitized by a high-temperature treatment compared with the hard carbon. The hard carbon is also called as hardly graphitized carbon. For the configuration of the present invention, the soft carbon and the hard carbon are not necessarily distinguished clearly. As the negative electrode active material, graphite; and the amorphous carbon of at least one of the soft carbon and the hard carbon may be used in combination.

The silicon-containing material may be any material as long as the material contains Si, and an example thereof includes a silicon alloy, a silicon compound, and a composite material containing Si. Among these, the composite material containing Si is preferable. D50 of the silicon-containing material is typically smaller than D50 of the graphite. The volume-based D50 of the silicon-containing material is, for example, greater than or equal to 1 µm and less than or equal to 20 µm, or greater than or equal to 1 µm and less than or equal to 15 µm. The silicon-containing material may be used singly, or may be used in combination of two or more thereof.

The preferable silicon-containing material (composite material) is of composite particles including an ion-conductive phase, and Si phases dispersed in the ion-conductive phase. The ion-conductive phase is, for example, at least one selected from the group consisting of a silicate phase, a carbon phase, a silicide phase, and a silicon oxide phase. The silicide phase is a phase of a compound composed of Si and an element more electrically positive than Si, and an example thereof includes NiSi, Mg₂Si, and TiSi₂. The Si phase is formed by Si dispersed as fine particles. The ion-conductive phase is a continuous phase constituted by aggregation of particles finer than the Si phase.

An average value of a size of the Si phase is preferably greater than or equal to 1 nm and less than or equal to 200 nm, and more preferably greater than or equal to 1 nm and less than or equal to 100 nm. The average size of the Si phases is calculated by photographing a scanning electron microscope (SEM) image of a particle cross section of the silicon-containing material, and averaging diameters of circumscribed circles of the Si phases extracted by image analysis. The average size of the Si phase may be, for example, greater than or equal to 1 nm and less than or equal to 50 nm. Reducing the size of the Si phase may reduce the particle expansion coefficient with charge and discharge while keeping high capacity.

The composite material may have a conductive layer covering a surface of the ion-conductive phase. The conductive layer is constituted with a material having higher conductivity than the ion-conductive layer, and forms a good conductive path in the negative electrode mixture layer 41. The conductive layer is, for example, a carbon coating constituted with a conductive carbon material. As the conductive carbon material, carbon black such as acetylene black and Ketjenblack, graphite, formless carbon having low crystallinity (amorphous carbon), and the like may be used. A thickness of the conductive layer is preferably greater than or equal to 1 nm and less than or equal to 200 nm, or greater than or equal to 5 nm and less than or equal to 100 nm with considering achievement of conductivity and diffusibility of Li ions toward the inside of the particles. The thickness of the conductive layer may be measured by observing a cross section of the composite material using a SEM or a transmission electron microscope (TEM).

The ion-conductive phase may include at least one selected from the group consisting of group I elements and group II elements of the periodic table. The ion-conductive layer may be a Li-doped silicon oxide phase. The ion-conductive phase may include at least one selected from the group consisting of B, Al, Zr, Nb, Ta, V, Y, Ti, P, Bi, Zn, Sn, Pb, Sb, Co, Er, F, W, and lanthanoids.

An example of the preferable composite material containing Si is of composite particles that have a sea-island structure in which fine Si is substantially uniformly dispersed in an amorphous silicon oxide phase, and that is represented entirely by the general formula SiOₓ (0 < x ≤ 2). The main component of silicon oxide may be silicon dioxide. The silicon oxide phase may be doped with Li. A content ratio (x) of oxygen to Si is, for example, 0.5 ≤ x < 2.0, and preferably 0.8 ≤ x ≤ 1.5.

Another example of the preferable composite material containing Si includes composite particles having a sea-island structure in which fine Si is substantially uniformly dispersed in an amorphous silicate phase. A preferable silicate phase is a lithium silicate phase containing Li. The lithium silicate phase is, for example, a phase of a composite oxide represented by the general formula Li_{2z}SiO_{(2+z)} (0 < z < 2). The lithium silicate phase preferably does not include Li₄SiO₄ (Z=2). Li₄SiO₄, which is an unstable compound, reacts with water and exhibits alkalinity, and therefore may modify Si, resulting in deterioration of the charge-discharge capacity. The lithium silicate phase preferably contains Li₂SiO₃ (Z=1) or Li₂Si₂O₅ (Z=1/2) as a main component from the viewpoints of stability, productivity, Li-ion conductivity, and the like.

Another example of a preferable composite material containing Si is of composite particles having a sea-island structure in which fine Si is substantially uniformly dispersed in a carbon phase. The carbon phase is preferably an amorphous carbon phase. The carbon phase may include a crystalline phase component, but preferably includes more amorphous phase component than the crystalline phase component. The amorphous carbon phase is constituted with, for example, a carbon material having greater than 0.34 nm of an average spacing of a (002) face measured by X-ray diffraction. The composite material including the carbon phase may have a conductive layer different from the carbon phase, or may not have the conductive layer.

The silicon-containing material has an oil absorption amount of, for example, greater than or equal to 45 ml per gram of a mask and less than or equal to 50 ml/100 g, and preferably greater than or equal to 48 ml/100 g and less than or equal to 46 ml/100 g. The oil absorption amount refers to an amount of an oily content that can be absorbed per 100 g of the silicon-containing material, and the oil absorption amount herein means an oil absorption amount of linseed oil measured in accordance with JIS K 5101.

The oil absorption amount of the silicon-containing material significantly affects an adsorption amount and a release amount of the water-soluble polymer 51, described later. Thus, it is necessary to control a manufacturing condition of the negative electrode 12 according to the oil absorption amount of the used silicon-containing material so that the adsorption amount and the release amount are within appropriate ranges. The silicon-containing material is obtained, for example, by synthesizing SiO₂ nanoparticles from an alkoxysilane as a raw material, and then forming an ion-conductive phase including the SiO₂ nanoparticles inside.

For the binder included in the negative electrode mixture layer 41, a fluorine-containing resin, an olefin resin, PAN, a polyimide, a polyamide, an acrylic resin, or the like may be used as in the case of the positive electrode 11, but polyvinyl acetate, styrene-butadiene rubber (SBR), or the like may be used. Among these, SBR is preferably used. The binder may be used singly, or a plurality of types thereof may be used in combination. A content rate of the binder is, for example, greater than or equal to 0.1 mass% and less than or equal to 5 mass% relative to the mass of the negative electrode mixture layer 41.

The negative electrode mixture layer 41 further includes the water-soluble polymer. The water-soluble polymer functions as, for example, the binder similarly to SBR, and also functions as a thickener in the negative electrode mixture slurry. The water-soluble polymer may be used singly, or a plurality of types thereof may be used in combination. A content rate of the water-soluble polymer in the negative electrode mixture layer 41 is, for example, greater than or equal to 0.1 mass% and less than or equal to 5.0 mass%, and preferably greater than or equal to 0.5 mass% and less than or equal to 3.0 mass%, and more preferably greater than or equal to 1.0 mass% and less than or equal to 2.0 mass% relative to the negative electrode active material. The content rate of the water-soluble polymer within the above range provides a better dispersion state of the negative electrode active material.

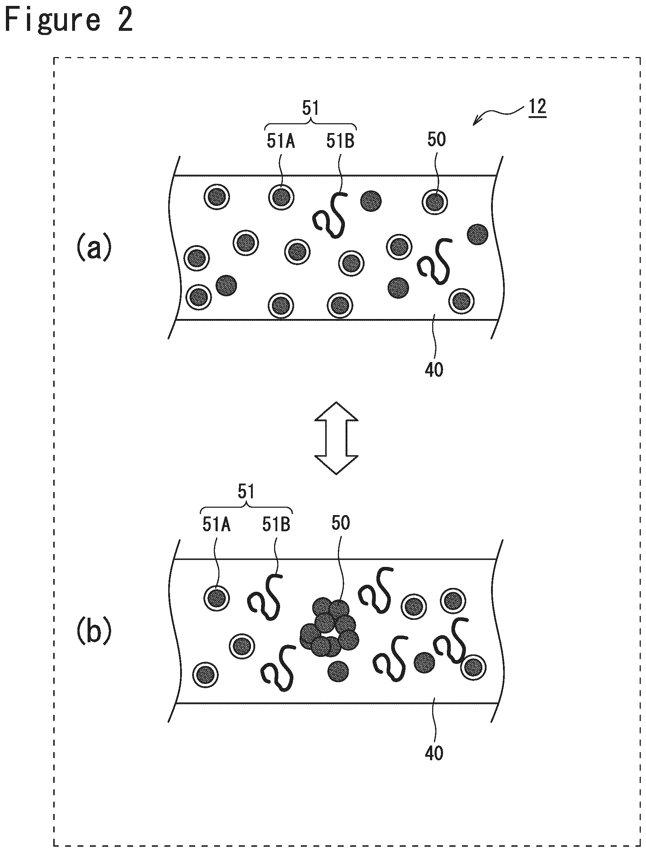

FIG. 2 is a view illustrating a state of the negative electrode active material and the water-soluble polymer in the negative electrode mixture layer 41. Although the negative electrode active material includes the carbon material such as graphite and the silicon-containing material, only the silicon-containing material 50 is extracted and illustrated in FIG. 2. As illustrated in FIG. 2, on the negative electrode core 40, the silicon-containing material 50 that is the negative electrode active material to constitute the negative electrode mixture layer 41 and the water-soluble polymer 51 that functions as the binder are present. FIG. 2(a) illustrates the negative electrode 12 of an example of an embodiment of the present disclosure. FIG. 2(b) illustrates a negative electrode with a bad dispersion state of the silicon-containing material 50 as Comparative Example.

The water-soluble polymer 51 includes: an adsorption polymer 51A that is adsorbed on particle surfaces of the silicon-containing material 50; and a release polymer 51B that is not adsorbed on the particle surfaces of the silicon-containing material 50 and that is isolated and released from the silicon-containing material 50. Note that the adsorption polymer 51A and the release polymer 51B are the same type of polymer. In the example illustrated in FIG. 2(a), aggregation of the silicon-containing material 50 is inhibited by the function of the water-soluble polymer 51, and the good dispersion state of the silicon-containing material 50 is achieved. Meanwhile, in the example illustrated in FIG. 2(b), aggregation of the silicon-containing material 50 occurs, and the dispersion state of the silicon-containing material 50 deteriorates compared with the case in FIG. 2(a).

The water-soluble polymer 51 is adsorbed on not only the silicon-containing material 50 but also the carbon material such as graphite. The water-soluble polymer 51 is present in each of: a state where the water-soluble polymer 51 at an amount of greater than or equal to 0.50 mass% relative to the negative electrode active material is adsorbed on the negative electrode active material; and a state where the water-soluble polymer 51 at an amount of less than or equal to 1.05 mass% relative to the negative electrode active material is released from the negative electrode active material. That is, the water-soluble polymer 51 at the amount corresponding to greater than or equal to 0.50 mass% based on the mass of the negative electrode active material is the adsorption polymer 51A, and the water-soluble polymer 51 at the amount corresponding to less than or equal to 1.05 mass% based on the mass of the negative electrode active material is the release polymer 51B. In this case, dispersibility of the negative electrode active material (specifically the silicon-containing material 50) becomes good to remarkably improves the cycle characteristics. If the adsorption amount of the water-soluble polymer 51 is less than 0.50 mass%, the aggregation of the silicon-containing material 50 as illustrated in FIG. 2(b) is easy to occur, and the effect of improving the cycle characteristics cannot be obtained.

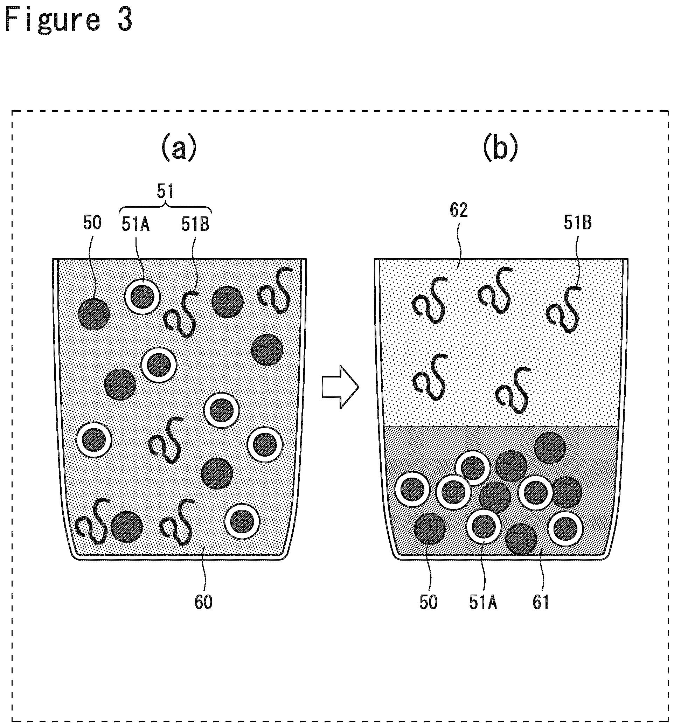

The adsorption polymer 51A is a polymer adsorbed on the particle surfaces of the negative electrode active material, and is a polymer present in a precipitate 61 (see FIG. 3 described later) in a method for quantifying the water-soluble polymer 51, described later. The adsorption polymer 51A is adsorbed on the particle surfaces so as to cover at least a part of the particle surfaces of the negative electrode active material. In contrast, the release polymer 51B may contact with, for example, the negative electrode active material, but is present in a supernatant liquid 62 (see FIG. 3) in the method for quantifying the water-soluble polymer 51.

The water-soluble polymer 51 may be any polymer soluble in water, and is preferably at least one selected from the group consisting of polysaccharides, polyacrylic acid, polyvinyl alcohol, a water-soluble acrylic resin, a water-soluble epoxy resin, a water-soluble polyester, a water-soluble polyamide, a derivative thereof, and a salt thereof. The water-soluble polymer 51 may be a naturally derived polymer, or may be a synthetic polymer.

The polysaccharides are polymers having C₆H₁₀O₅ as a basic structure, and an example thereof includes: starches such as starch acetate, starch phosphate, carboxymethyl starch, and hydroxyethyl starch; cellulose such as carboxymethylcellulose, methylcellulose, hydroxyethylcellulose, and hydroxypropylcellulose; polyuronides such as pectic acid and alginic acid; pullulan; and dextrin.

Among these, at least one selected from the group consisting of carboxymethylcellulose (CMC), polyacrylic acid (PAA), and a salt thereof is preferably used. The water-soluble polymer 51 may be constituted with substantially only the CMC salt or the PAA salt, but is preferably the CMC salt (for example, a sodium salt) and the PAA salt (for example, a sodium salt, an ammonium salt, or a lithium salt). A weight-average molecular weight of CMC is, for example, greater than or equal to 160,000 and less than or equal to 380,000. A weight-average molecular weight of PAA is, for example, greater than or equal to 5,000 and less than or equal to 1,000,000.

A mass ratio between the CMC salt and the PAA salt is not particularly limited, but the PAA salt is preferably included at a larger amount than the CMC salt. An example of a preferable content rate of the CMC salt is greater than or equal to 0.3 mass% and less than or equal to 0.9 mass% relative to the negative electrode active material. An example of a preferable content rate of the PAA salt is greater than or equal to 0.6 mass% and less than or equal to 1.2 mass% relative to the negative electrode active material. The content rate of SBR is preferably lower than the content rate of the water-soluble polymer 51, and may be lower than the content rate of the CMC salt.

The amount of the water-soluble polymer 51 adsorbed on the negative electrode active material (the adsorption polymer 51A) may be greater than or equal to 0.50 mass% of the amount corresponding to the mass of the negative electrode active material, and preferably less than or equal to 0.70 mass%. That is, the amount of the adsorption polymer 51A is preferably greater than or equal to 0.50 mass% and less than or equal to 0.70 mass% relative to the negative electrode active material. The amount of the water-soluble polymer 51 released from the negative electrode active material (the release polymer 51B) may be less than or equal to 1.05 mass% of the amount corresponding to the mass of the negative electrode active material, and preferably greater than or equal to 0.85 mass%. That is, the amount of the release polymer 51B is preferably greater than or equal to 0.85 mass% and less than or equal to 1.05 mass% relative to the negative electrode active material. In this case, the effect of improving the cycle characteristics becomes more remarkable. The release amount of the release polymer 51B significantly contributes to stability of the negative electrode mixture slurry, and as a result, significantly affects the dispersion state of the silicon-containing material 50.

FIG. 3 is a view for describing a method for measuring the adsorption polymer 51A and the release polymer 51B. As illustrated in FIG. 3(a), the negative electrode mixture layer 41 is dispersed in water to produce a slurry 60. Subsequently, as illustrated in FIG. 3(b), the slurry 60 is centrifugally separated to the precipitate 61 and the supernatant liquid 62. In this time, the adsorption polymer 51A is present in the precipitate 61, and the release polymer 51B is present in the supernatant liquid 62. Note that a solid-liquid separation means such as filtration may be used instead of the centrifugal separation. Although FIG. 3 illustrates only the silicon-containing material 50 as the negative electrode active material, the carbon material also precipitates with the centrifugal separation, and the adsorption polymer 51A adsorbed on the carbon material is also included in the precipitate 61.

The procedure for quantifying the adsorption polymer 51A and the release polymer 51B is as follows.
(1) The negative electrode mixture layer is dispersed in a solvent (water) at a predetermined ratio to produce the slurry 60. In this time, the release polymer 51B is dissolved in water. Meanwhile, the adsorption polymer 51A is still adsorbed on the negative electrode active material (the carbon material and the silicon-containing material 50), and not dissolved in water.
(2) The slurry 60 is centrifugally separated to purify the supernatant liquid 62 from which the negative electrode active material is removed.
(3) A total amount of carbon in the supernatant liquid 62 is measured, and an amount of organic carbon (the amount of the release polymer 51B) is calculated from a difference between the total amount of carbon and inorganic carbon (fine powder of the active material that does not precipitate with the centrifugal separation) in the liquid.
(4) The above amount of organic carbon is subtracted from an amount of the resin component included in the negative electrode mixture layer per unit volume to calculate an amount of organic carbon adsorbed on the negative electrode active material (the amount of the adsorption polymer 51A).

The total amount of carbon in the supernatant liquid 62 may be measured by a non-dispersive infrared-ray gas analysis method. First, an amount of carbon dioxide generated by pyrolyzing the supernatant liquid 62 is measured by the non-dispersive infrared-ray gas analysis method. Then, an amount of carbon dioxide generated by adding hydrochloric acid into the supernatant liquid 62 is similarly measured. The amount of carbon dioxide generated by adding hydrochloric acid is the amount of inorganic carbon derived from fine powder of the active material that does not precipitate with the centrifugal separation. Note that, when the negative electrode mixture layer 41 includes SBR, substantially all of SBR is present in the supernatant liquid 62. Thus, the amount of the release polymer 51B is determined by subtracting the amount of SBR from the amount of organic carbon calculated from the difference between the total amount of carbon and inorganic carbon in the liquid.

A mass ratio between the adsorption polymer 51A and the release polymer 51B in the negative electrode mixture layer 41 is considered to be equal to that in the negative electrode mixture slurry. That is, the mass ratio between the adsorption polymer 51A and the release polymer 51B in the negative electrode mixture layer 41 is determined in a preparing process of the negative electrode mixture slurry. Hereinafter, the negative electrode mixture slurry and a preparing method therefor will be described.

The negative electrode mixture slurry includes, for example: the negative electrode active material including the carbon material and the silicon-containing material 50; the water-soluble polymer 51; SBR; and a dispersion medium. For the dispersion medium, water is used, but a water-soluble solvent that is dissolved in water may be used in combination. In the negative electrode mixture slurry, the water-soluble polymer 51 at an amount of greater than or equal to 0.50 mass%, preferably greater than or equal to 0.50 mass% and less than or equal to 0.70 mass%, relative to the negative electrode active material is adsorbed on the negative electrode active material, and the water-soluble polymer 51 at an amount of less than or equal to 1.05 mass%, preferably greater than or equal to 0.85 mass% and less than or equal to 1.05 mass%, relative to the negative electrode active material is released, not adsorbed on the negative electrode active material, for example. The total amount of the water-soluble polymer 51 is preferably greater than or equal to 0.5 mass% and less than or equal to 3.0 mass% relative to the negative electrode active material.

The negative electrode mixture slurry is prepared through, for example, two-stage kneading steps of: mixing and kneading the negative electrode active material, the water-soluble polymer 51, and water; and then adding a dispersion of SBR and water into the slurry obtained in the above kneading step for kneading. In the first kneading step, the water-soluble polymer 51 may be efficiently adsorbed on the particle surfaces of the negative electrode active material due to high viscosity of the slurry. For kneading, a conventionally known apparatus such as a planetary mixer may be used. In typical, a larger rotation rate of the kneading apparatus and a longer treatment time of kneading increase the adsorption amount of the water-soluble polymer 51 and decrease the release amount.

The adsorption amount and release amount of the water-soluble polymer 51 significantly depend on the oil absorption amount of the silicon-containing material 50. Under the same kneading condition, reducing the oil absorption amount of the silicon-containing material 50 tends to increase the adsorption amount and decrease the release amount, and increasing the oil absorption amount of the silicon-containing material 50 tends to decrease the adsorption amount and increase the release amount. The kneading condition such as the rotation rate of the kneading apparatus and the treatment time is regulated so that the adsorption amount of the water-soluble polymer 51 relative to the negative electrode active material is greater than or equal to 0.50 mass% and less than or equal to 0.70 mass% and so that the release amount of the water-soluble polymer 51 is greater than or equal to 0.85 mass% and less than or equal to 1.05 mass%. The adsorption amount and the release amount of the water-soluble polymer 51 are preferably regulated with considering the oil absorption amount of the silicon-containing material 50.

### [Separator]

For the separator 13, a porous sheet having an ion permeation property and an insulation property is used. Specific examples of the porous sheet include a microporous thin film, a woven fabric, and a nonwoven fabric. As a material for the separator 13, a polyolefin such as polyethylene or polypropylene, cellulose, or the like is preferable. The separator 13 may have a single-layered structure or a multi-layered structure. The separator 13 may have, for example: a multi-layered structure including a thermoplastic resin layer such as a polyolefin and a cellulose fiber layer; a bilayer structure of polyethylene (PE) / polypropylene (PP); or a three-layer structure of PE/PP/PE.

On an interface between the separator 13 and at least one of the positive electrode 11 and the negative electrode 12, a filler layer including an inorganic filler may be disposed. Examples of the inorganic filler include oxides containing a metal element such as Ti, Al, Si, and Mg, and a phosphoric acid compound. The filler layer may be formed by applying a slurry containing the filler on the surface of the positive electrode 11, the negative electrode 12, or the separator 13. On a surface of the separator 13, a highly heat-resistant resin layer (a heat-resistant layer) such as an aramid resin may be disposed. The separator 13 may have a substrate composed of the porous sheet and the filler layer or the heat-resistant layer disposed on the substrate, for example.

### EXAMPLES

Hereinafter, the present disclosure will be further described with Examples, but the present disclosure is not limited to these Examples.

### <Example 1>

### [Production of Positive Electrode]

As a positive electrode active material, a lithium-containing transition metal composite oxide was used. This positive electrode active material, acetylene black, and polyvinylidene fluoride were mixed at a content mass ratio of 98:1:1, and N-methyl-2-pyrrolidone (NMP) was used as a dispersion medium to prepare a positive electrode mixture slurry. Then, the positive electrode mixture slurry was applied on a positive electrode core composed of aluminum foil, the coating film was dried and compressed, and then the positive electrode core was cut to a predetermined electrode size to obtain a positive electrode in which a positive electrode mixture layer was formed on both surfaces of the positive electrode core. At a part of the positive electrode, an exposed portion where the surface of the positive electrode core was exposed was provided.

### [Synthesis of Silicon-Containing Material]

In a liquid for mixing ethanol/water/ammonia, tetraethoxysilane (TEOS) and cetyltrimethylammonium bromide (CTAB) were mixed to obtain SiO₂ nanoparticles modified with CTAB. Resorcinol and formaldehyde were further added, and polymerization was performed to obtain polymer particles including the SiO₂ nanoparticles inside. In this time, a ratio between resorcinol and TEOS was about 0.5:1. The obtained polymer particles were dried, and then the polymer was carbonized by heating at 800°C in a nitrogen atmosphere, and mixed with magnesium powder and heated at 650°C in an argon atmosphere to perform a magnesium thermal reduction reaction. MgO was dissolved with an HCl/H₂O/ethanol solution from the particles after the reaction, the resultant was washed with ethanol, and then dried to obtain a mesoporous silicon-containing material in which Si phases were dispersed in an amorphous carbon phase.

An oil absorption amount of the obtained silicon-containing material was measured by the above method (the same applied the following Examples and Comparative Example). The oil absorption amount of the material was 45 ml/100 g.

### [Preparation of Negative Electrode Mixture Slurry]

As a negative electrode active material, a mixture of the above silicon-containing material and artificial graphite at a mass ratio of 10:90 was used. This negative electrode active material, sodium carboxymethylcellulose (CMC-Na), and lithium polyacrylate were mixed at a solid-content mass ratio of 100:0.65:0.90, and water was used as a dispersion medium to obtain a first slurry. The first kneading step of kneading the raw materials of the first slurry was performed by using a planetary mixer under a condition for a solid-content rate of greater than or equal to 55%. Subsequently, a dispersion of SBR was added into the first slurry so that an amount of SBR was 0.4 mass% relative to the negative electrode active material, and water was added and the mixture was kneaded to obtain a negative electrode mixture slurry. This second kneading step was performed by using a planetary mixer under a condition for a solid-content rate of greater than or equal to 47%.

### [Production of Negative Electrode]

The above negative electrode mixture slurry was applied on both surfaces of a negative electrode core composed of copper foil, the coating film was dried, then the coating film was rolled by using a roller, and cut to a predetermined electrode size to obtain a negative electrode in which a negative electrode mixture layer was formed on both the surfaces of the negative electrode core. At a part of the negative electrode, an exposed portion where the surface of the negative electrode core was exposed was provided.

### [Preparation of Non-Aqueous Electrolyte]

Into a mixed solvent in which ethylene carbonate (EC), methyl ethyl carbonate (MEC), and dimethyl carbonate (DMC) were mixed at a volume ratio (25°C) of 3:3:4, LiPF₆ was dissolved at a concentration of 1.2 mol/L to prepare a non-aqueous electrolyte liquid.

### [Production of Test Cell (Non-Aqueous Electrolyte Secondary Battery)]

An aluminum lead was attached to the exposed portion of the positive electrode, and a nickel lead was attached to the exposed portion of the negative electrode. The positive electrode and the negative electrode were spirally wound via a separator made of a polyolefin, and then pressing-formed in a radial direction to produce a flat and wound electrode assembly. This electrode assembly was housed in an exterior body constituted with an aluminum laminate sheet, the non-aqueous electrolyte liquid was injected thereinto, and then an opening portion of the exterior body was sealed to obtain a test cell.

### <Example 2>

A test cell was produced in the same manner as in Example 1 except that a silicon-containing material X2 having an oil absorption amount of 49.5 ml/100 g was used instead of the silicon-containing material X1. In synthesis of silicon-containing materials in Examples 2 to 4, the oil absorption amounts were regulated by appropriately changing the crushing time and the amount of the removed fine powder.

### <Example 3>

A test cell was produced in the same manner as in Example 1 except that a silicon-containing material X3 having an oil absorption amount of 48.8 ml/100 g was used instead of the silicon-containing material X1.

### <Example 4>

A test cell was produced in the same manner as in Example 1 except that a silicon-containing material X4 having an oil absorption amount of 45.6 ml/100 g was used instead of the silicon-containing material X1.

### <Comparative Example 1>

A test cell was produced in the same manner as in Example 1 except that a silicon-containing material X5 having an oil absorption amount of 51.5 ml/100 g was used instead of the silicon-containing material X1.

The cycle characteristics (capacity retention) of each of the test cells of Examples and Comparative Example were evaluated by the following method. Table 1 shows the evaluation results. By the method illustrated in FIG. 3, the adsorption amount of the water-soluble polymer on the negative electrode active material and the release amount of the water-soluble polymer from the negative electrode active material in the negative electrode mixture layer of each of the test cells were measured. Table 1 shows the measurement results of the adsorption amount and the release amount of the water-soluble polymer together with the evaluation results of the capacity retention.

### [Evaluation of Cycle Characteristics (Capacity Retention after Cycle Test)]

Under a temperature environment at 25°C, the above test cell was charged at a constant current of 0.3 It until a battery voltage reached 4.2 V, and then charged at a constant voltage of 4.2 V until a current value reached 0.02 It. Thereafter, the test cell was discharged at a constant current of 0.5 It until the battery voltage reached 2.5 V. This charge and discharge was specified as one cycle, and 400 cycles were performed. A discharge capacity at the 1st cycle and a discharge capacity at the 400th cycle were determined, and the capacity retention was calculated by the following formula. Capacity retention (%) = (Discharge capacity at 400th cycle / Discharge capacity at 1st cycle) × 100

**[Table 1]**

| | Graphite | Si-containing material | | Water-soluble polymer | | Capacity retention [%] |
|---|---|---|---|---|---|---|
| | Content rate [mass%] | Content rate [mass%] | Oil absorption amount [ml/100 g] | Adsorbed component [mass%] | Released component [mass%] | |
| Example 1 | 90 | 10 | 45.0 | 0.65 | 0.90 | 81.9 |
| Example 2 | 90 | 10 | 49.5 | 0.50 | 1.05 | 81.5 |
| Example 3 | 90 | 10 | 48.8 | 0.56 | 0.99 | 80.7 |
| Example 4 | 90 | 10 | 45.6 | 0.65 | 0.90 | 83.5 |
| Comparative Example 1 | 90 | 10 | 51.5 | 0.48 | 1.07 | 78.2 |

As shown in Table 1, all the test cells of Examples exhibited high capacity retention after the cycle test and excellent cycle characteristics compared with the test cell of Comparative Example 1. From this result, it is understood that the capacity retention is remarkably improved when the water-soluble polymer is present in each of: a state where the water-soluble polymer at an amount of greater than or equal to 0.50 mass% relative to the negative electrode active material is adsorbed on the negative electrode active material; and a state where the water-soluble polymer at an amount of less than or equal to 1.05 mass% relative to the negative electrode active material is released from the negative electrode active material.

The present disclosure will be further described with the following embodiments.

Constitution 1: A negative electrode for a non-aqueous electrolyte secondary battery, comprising: a negative electrode core; and a negative electrode mixture layer including a negative electrode active material and a water-soluble polymer, and disposed on the negative electrode core, wherein the water-soluble polymer is present in each of: a state where the water-soluble polymer at an amount of greater than or equal to 0.50 mass% relative to the negative electrode active material is adsorbed on the negative electrode active material; and a state where the water-soluble polymer at an amount of less than or equal to 1.05 mass% relative to the negative electrode active material is released from the negative electrode active material, and the negative electrode active material includes a carbon material and a silicon-containing material.

Constitution 2: The negative electrode for a non-aqueous electrolyte secondary battery according to Constitution 1, wherein the silicon-containing material includes an ion-conductive phase and Si phases dispersed in the ion-conductive phase.

Constitution 3: The negative electrode for a non-aqueous electrolyte secondary battery according to Constitution 2, wherein the ion-conductive phase is at least one selected from the group consisting of a silicate phase, a carbon phase, a silicide phase, and a silicon oxide phase.

Constitution 4: The negative electrode for a non-aqueous electrolyte secondary battery according to Constitution 1 or 2, wherein the water-soluble polymer is at least one selected from the group consisting of polysaccharides, polyacrylic acid, a water-soluble acrylic resin, a water-soluble epoxy resin, a water-soluble polyester, a water-soluble polyamide, a derivative thereof, and a salt thereof.

Constitution 5: The negative electrode for a non-aqueous electrolyte secondary battery according to any one of Constitutions 1 to 4, wherein a content rate of the water-soluble polymer in the negative electrode mixture layer is greater than or equal to 1.0 mass% and less than or equal to 3.0 mass% relative to the negative electrode active material.

Constitution 6: The negative electrode for a non-aqueous electrolyte secondary battery according to Constitution 5, wherein the amount of the water-soluble polymer adsorbed on the negative electrode active material is greater than or equal to 0.50 mass% and less than or equal to 0.70 mass% relative to the negative electrode active material, and the amount of the water-soluble polymer released from the negative electrode active material is greater than or equal to 0.85 mass% and less than or equal to 1.05 mass% relative to the negative electrode active material.

Constitution 7: A non-aqueous electrolyte secondary battery, comprising: the negative electrode for a non-aqueous electrolyte secondary battery according to any one of Constitutions 1 to 6; a positive electrode; and a non-aqueous electrolyte.

### REFERENCE SIGNS LIST

10 Non-aqueous electrolyte secondary battery, 11 Positive electrode, 12 Negative electrode, 13 Separator, 14 Electrode assembly, 16 Exterior housing can, 17 Sealing assembly, 18, 19 Insulating plate, 20 Positive electrode lead, 21 Negative electrode lead, 22 Grooved portion, 23 Internal terminal plate, 24 Lower vent member, 25 Insulating member, 26 Upper vent member, 27 Cap, 28 Gasket, 30 Positive electrode core, 31 Positive electrode mixture layer, 40 Negative electrode core, 41 Negative electrode mixture layer, 50 Negative electrode active material, 51 Water-soluble polymer, 51A Adsorption polymer, 51B Release polymer, 60 Slurry, 61 Precipitate, 62 Supernatant liquid.

## Claims

1. A negative electrode for a non-aqueous electrolyte secondary battery, comprising:
a negative electrode core; and
a negative electrode mixture layer including a negative electrode active material and a water-soluble polymer, and disposed on the negative electrode core, wherein
the water-soluble polymer is present in each of: a state where the water-soluble polymer at an amount of greater than or equal to 0.50 mass% relative to the negative electrode active material is adsorbed on the negative electrode active material; and a state where the water-soluble polymer at an amount of less than or equal to 1.05 mass% relative to the negative electrode active material is released from the negative electrode active material, and
the negative electrode active material includes a carbon material and a silicon-containing material.

2. The negative electrode for a non-aqueous electrolyte secondary battery according to claim 1, wherein the silicon-containing material includes an ion-conductive phase and Si phases dispersed in the ion-conductive phase.

3. The negative electrode for a non-aqueous electrolyte secondary battery according to claim 2, wherein the ion-conductive phase is at least one selected from the group consisting of a silicate phase, a carbon phase, a silicide phase, and a silicon oxide phase.

4. The negative electrode for a non-aqueous electrolyte secondary battery according to claim 1, wherein the water-soluble polymer is at least one selected from the group consisting of polysaccharides, polyacrylic acid, polyvinyl alcohol, a water-soluble acrylic resin, a water-soluble epoxy resin, a water-soluble polyester, a water-soluble polyamide, a derivative thereof, and a salt thereof.

5. The negative electrode for a non-aqueous electrolyte secondary battery according to claim 1, wherein a content rate of the water-soluble polymer in the negative electrode mixture layer is greater than or equal to 0.5 mass% and less than or equal to 3.0 mass% relative to the negative electrode active material.

6. The negative electrode for a non-aqueous electrolyte secondary battery according to claim 5, wherein
the amount of the water-soluble polymer adsorbed on the negative electrode active material is greater than or equal to 0.50 mass% and less than or equal to 0.70 mass% relative to the negative electrode active material, and
the amount of the water-soluble polymer released from the negative electrode active material is greater than or equal to 0.85 mass% and less than or equal to 1.05 mass% relative to the negative electrode active material.

7. A non-aqueous electrolyte secondary battery, comprising:
the negative electrode for a non-aqueous electrolyte secondary battery according to any one of claims 1 to 6;
a positive electrode; and
a non-aqueous electrolyte.
